Europäisches Patentamt

European Patent Office

Office européen des brevets

(19)

(11) Publication number: **0 404 939 A1**

## (12) EUROPEAN PATENT APPLICATION
## published in accordance with Art. 158(3) EPC

(21) Application number: 89903250.2

(22) Date of filing: 02.03.89

(86) International application number:
PCT/JP89/00223

(87) International publication number:
WO 89/08874 (21.09.89 89/23)

(51) Int. Cl.⁵: **G05B 19/18, G05B 19/19**

(30) Priority: 09.03.88 JP 55758/88

(43) Date of publication of application:
02.01.91 Bulletin 91/01

(84) Designated Contracting States:
**DE FR GB**

(71) Applicant: **FANUC LTD**
**3580, Shibokusa Aza-Komanba Oshinomura**
**Minamitsuru-gun Yamanashi 401-05(JP)**

(72) Inventor: **KAWAMURA, Hideaki**
**1375-5, Naraharamachi Hachioji-shi**
**Tokyo 193(JP)**
Inventor: **FUJIBAYASHI, Kentaro**
**2-8-6, Nishikubo Musashino-shi**
**Tokyo 180(JP)**
Inventor: **SATO, Morimasa**
**520-64-510, Nagabusamachi Hachioji-shi**
**Tokyo 193(JP)**

(74) Representative: **Brunner, Michael John et al**
**GILL JENNINGS & EVERY 53-64 Chancery**
**Laneane**
**London WC2A 1HN(GB)**

(54) NUMERICAL CONTROLLER.

(57) A numerical controller which controls multiple spindles through multiple channels. The numerical controller includes a channel bus (1) having a plurality of slots; a plurality of channels (10, 20, 30) connected to the channel bus (1) to read, decode and execute numerical control instructions of a group of axes; and axis control modules (3, 4) for controlling a plurality of servomotors. These channels (10, 20, 30) share the processing, commonly utilize the external equipment, and constitute a more flexible numerical control system.

FIG. 1

TITLE MODIFIED
see front page

DESCRIPTION

NUMERICAL CONTROL SYSTEM

Technical Field

The present invention relates to a numerical control system having a plurality of channels, and more particularly to a numerical control system having channels for reading, decoding, and executing numerical control commands.

Background Art

Numerical control systems generally have one functional arrangement for reading, decoding, and executing numerical control commands to control a plurality of axes. There has also been employed a numerical control system having a plurality of such functional arrangements for controlling a numerically controlled multiple-head lathe or the like which has a plurality of spindles. Such a numerical control system is essentially in the form of two numerical control apparatus combined with each other, one for controlling a first spindle, an X1 axis, and a Z1 axis and the other for controlling a second spindle, an X2 axis, and a Z2 axis.

While the above numerical control system can control a numerically controlled lathe having two spindles, since it is merely a combination of two numerical control apparatus, it suffers the following problems:

First, the numerical control system has an unbalanced processing capability. More specifically, there is no problem when the task of the processor of one of the numerical control apparatus and the task of the processor of the other numerical control apparatus are in equilibrium. However, even when these tasks are brought out of equilibrium, the processors cannot process the tasks of each other.

Secondly, the two numerical control apparatus cannot access each other's data. More specifically, the numerical control system has two functional arrangements, but the lathe to be controlled is a single machine. Even if the numerical control apparatus have data which are required by each other, they cannot access each other's data. Therefore, the numerical control system requires memories which would otherwise be unnecessary, and cannot perform flexible control. Communication ports or the like are also required by the numerical control system to eliminate the above drawback.

Thirdly, the numerical control apparatus must be provided with common peripherals such as a CRT/MDI unit, a floppy disk, etc.

Disclosure of the Invention

In view of the aforesaid problems of the conventional numerical control systems, it is an object of the present invention to provide a numerical control system having a plurality of channels for reading, decoding, and executing numerical control commands.

According to the present invention, the above object can be achieved by a numerical control system for controlling a plurality of axes with a plurality of functional arrangements, comprising a channel bus having a plurality of slots, a plurality of channels for reading, decoding, and executing numerical control commands for a group of axes, the channels being connected to the channel bus, and an axis control module for controlling a plurality of servomotors.

One of the channels is used as a master channel for controlling the entire numerical control system.

The channels connected to the channel bus process numerical control commands so that the processing capacities of the channels are kept in equilibrium. The data of the channels can be accessed by each other, and the channels can use common peripherals.

Brief Description of the Drawings

FIG. 1 is a block diagram of a numerical control system according to the present invention; and

FIG. 2 is a block diagram showing the functions of a channel of the numerical control system.

Best Mode for Carrying Out the Invention

An embodiment of the present invention will hereinafter be described with reference to the drawings.

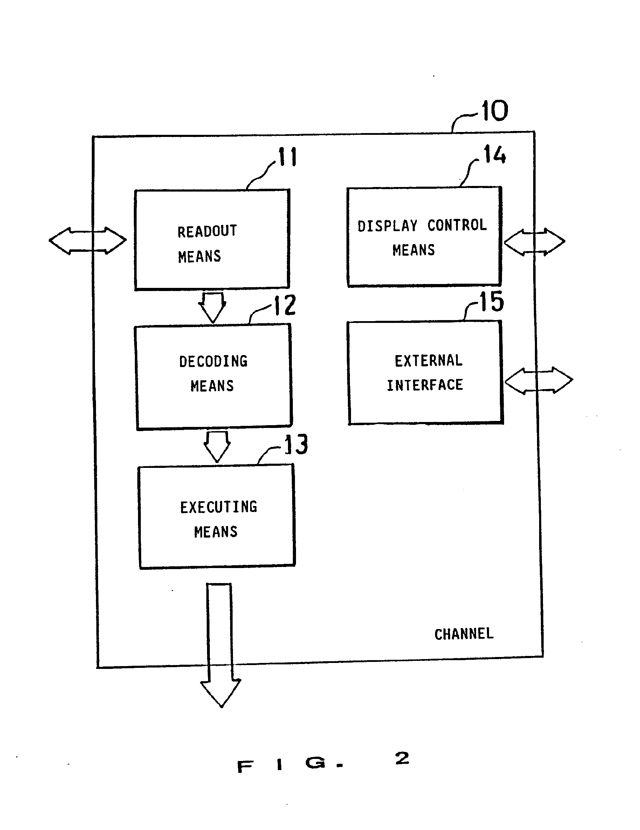

FIG. 1 shows in block form a numerical control system according to the present invention. A channel bus 1 comprises a multiple-channel master bus interconnecting a plurality of channels. The channel bus 1 has a number slots 1a, 1b, ··· 1f to which the channels (described later) are connected.

A CRT/MDI unit 2 is connected to the slot 1f. The CRT/MDI unit 2 can display data and graphic information for the numerical control system and also receive data from a keyboard thereof. The CRT/MDI unit 2 can be accessed by each of the channels.

Axis control modules 3, 4 are connected respectively to the slots 1b, 1d. Each of the axis control modules 3, 4 can control servomotors for 2 or 3 axes.

Channels 10, 20, 30 are connected respectively to the slots 1a, 1c, 1e. Each of the channels has a function equivalent to the function of a conventional numerical control apparatus. Thus, one channel can read, decode, and execute numerical control commands. Each channel can also control a component such as the CRT/MDI unit 2 or the like. Therefore, each individual channel can process commands for a certain number of axes which a conventional numerical control apparatus has processed. For example, to control a numerically controlled lathe having two heads, the channel I 10 can control a first spindle, an X1 axis, and a Z1 axis, the channel II 20 can control a second spindle, an X2 axis, and a Z2 axis, and the channel III 30, as a master channel, can perform the control of the entire system for monitoring the other channels, for example. The master channel 30 can also control an axis control module, a spindle, etc. Each of the channels 10, 20, 30 can access the CRT/MDI unit 2.

These channels 10, 20, 30 are connected to the channel bus 1 and share their processing operation. If one of the channels runs short of its processing ability, part of the processing operation thereof is transferred to another channel. For example, while the channel I 10 is executing interpolation at very small intervals and the channel II 20 is executing linear interpolation, part of preprocessing operations for the interpolation carried out by the channel I 10 may be executed by the channel II 20. Therefore, the processing abilities of the channels can be balanced so that the processing operation will not be brought out of equilibrium.

The channels can access necessary data through the channel bus 1. The CRT/MDI unit 2 connected to the slot 1f is supplied with display data from the channels 10, 20, 30. Input data entered from the keyboard of the CRT/MDI unit 2 are supplied to the channels 10, 20, 30.

- 6 -

The channel III 30 as a master channel performs the control of the entire system such as for determining the priority with respect to use of the channel bus 1 and monitoring the other channels. If the number of tasks to be processed by the channel III 30 is increased to the point where it can no longer perform the control of the entire system, and any of the other channels still has a processing ability left, then the channel III 30 can transfer its master function to the other channel.

Although the axes to be controlled have heretofore been given in a fixed combination, they can be given in various combinations by connecting the above channels 10, 20, 30 to the channel bus 1. For example, the axes may first be combined such that the X1 axis and the Z1 axis are controlled by the channel I 10 and the X2 axis and the Z2 axis are controlled by the channel II 20. Then, when a different workpiece is to be machined, the axes may be combined such that the X1 axis, the Z1 axis, and the X2 axis are controlled by the channel I 10 and the Z2 axis is controlled by the channel II 20. By thus varying the combination of the axes to be controlled, the function of the machine tool being controlled is also varied.

The combination of the axes can be varied by varying the parameters or the like depending on the machine tool to be controlled. Commands for varying the axis combination

- 7 -

may be inserted in a machining program. The axis combination may also be varied by using an external signal.

Through the use of such a numerical control system, it becomes possible to design a numerically controlled machine tool having a mechanism of a new concept.

Although not shown in FIG. 1, input/output units such as a floppy disk drive, a tape reader, a tape puncher, a hard disk drive, etc. may be connected to the channel bus. These input/output units may be controlled by the channels through the channel bus, and may receive and issue data for a machining program or the like. An interface to be connected to the communication circuit of a host computer or the like may also be connected to the channel bus and controlled by the channels. Moreover, a spindle control circuit for controlling a spindle, a PC (programmable controller) of the built-in type, or the like may also be connected to the channel bus and controlled by the channels.

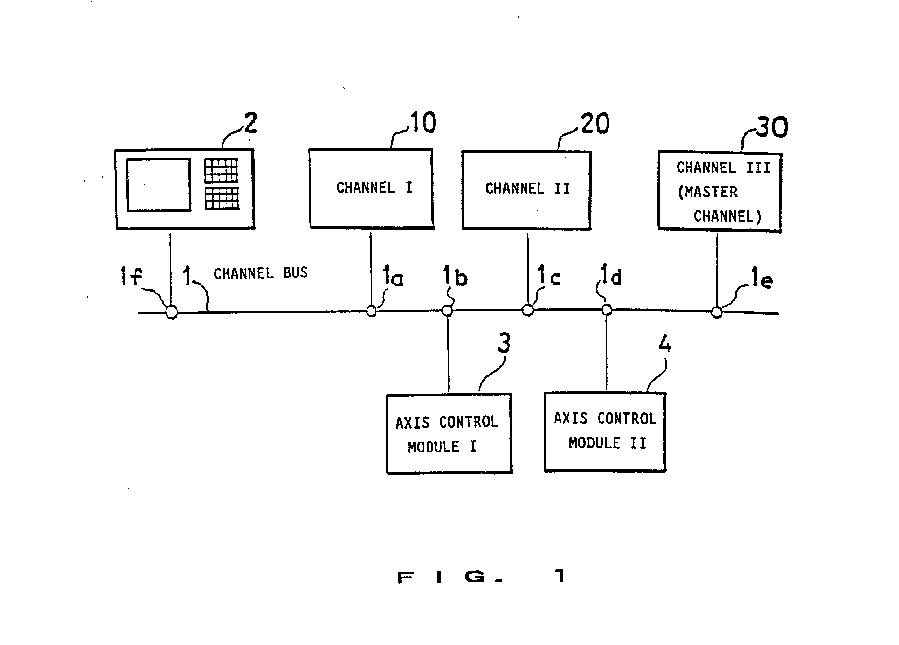

FIG. 2 shows the functions of a channel in block form. Denoted at 10 is a channel and 11 a readout means for reading a machining program from an internal memory or an external memory of another channel.

The channel 10 has a decoding means 12 for decoding the machining program read by the readout means 11 and converting the program into a form that can be executed. The decoding means 12 effects preprocessing operations for the numerical control system which include the conversion of an absolute command value to an incremental value, offset calculations, and the conversion of a curve to be interpolated to a straight line. The decoding means 12 also processes axis control commands and other commands such as an MST function.

An executing means 13 interpolates the commands processed by the decoding means 12 and issues output pulses. The executing means 13 also issues contact outputs for the MST function, etc. These output signals are applied to the axis control modules or the PC directly or through the channel bus.

A display control means 14 supplies display data to the CRT/MDI unit 2 through the channel bus, and receives signals from the keyboard of the CRT/MDI unit 2.

An external interface 15 controls, through the channel bus, peripherals such as a floppy disk drive, a tape puncher, a tape reader, and a hard disk drive, for example. The external interface 15 can also control a communication interface connected to a host computer.

Each of the channels may comprise a microprocessor system comprising a processor, a RAM, a ROM, and an interface. A portion of the RAM may be constructed as a bubble memory or a non-volatile memory backed up by a battery. The ROM may comprise an EPROM or EEPROM.

- 9 -

For an increased processing capability, a coprocessor, an MMU (memory management unit), or the like may be added to each of the channels. With respect to hardware, one printed-circuit board may be used as one channel, and a suitable number of channels may be employed depending on the system construction, so that an economic numerical control system can be designed.

Since the channels share the processing operation, can transmit and receive data through the channel bus 1, and change their share of processing operation as required, the numerical control system can provide control for various machine tools.

With the present invention, as described above, each channel has the function of a conventional numerical control apparatus, and the channels are interconnected by a channel bus. Therefore, the decentralized processing capability is increased, the data of the channels can be accessed by each other, and the CRT/MDI unit can be shared by the channels.

The task to be processed by each channel can be varied by program commands, input signals, or parameters. Therefore, a flexible numerical control system can be constructed which depends upon a machine tool to be controlled.

- 10 -

CLAIM

1. A numerical control system for controlling a plurality of axes with a plurality of functional arrangements, comprising:

a channel bus having a plurality of slots;

a plurality of channels for reading, decoding, and executing numerical control commands for a group of axes, said channels being connected to said channel bus; and

an axis control module for controlling a plurality of servomotors.

2. A numerical control system according to claim 1, wherein the grouping of the axes controlled by said channels and processing operations are varied by parameters, control programs, or external signals.

3. A numerical control system according to claim 1, wherein one of said channels serves as a master channel for controlling the numerical control system in its entirety to monitor the other channels.

4. A numerical control system according to claim 3, wherein said master channel can transfer a master function to one of the other channels.

5. A numerical control system according to claim 1, wherein each of said channels includes display control means for controlling a CRT/MDI unit.

6. A numerical control system according to claim 1, wherein each of said channels includes an external interface for controlling peripherals including a floppy disk drive, a tape reader, a tape puncher, and a hard disk drive.

7. A numerical control system according to claim 1, wherein each of said channels comprises a processor, a RAM, a ROM, and an interface which are mounted on a single printed-circuit board.

8. A numerical control system according to claim 7, wherein each of said channels further comprises a coprocessor and a memory management unit.

FIG. 2

F I G . 1

# INTERNATIONAL SEARCH REPORT

International Application No  PCT/JP89/00223

## I. CLASSIFICATION OF SUBJECT MATTER (if several classification symbols apply, indicate all) 6

According to International Patent Classification (IPC) or to both National Classification and IPC

Int. Cl$^4$   G05B19/18, 19/19

## II. FIELDS SEARCHED

| Minimum Documentation Searched 7 | |
|---|---|
| Classification System | Classification Symbols |
| IPC | G05B19/18, 19/19 |

| Documentation Searched other than Minimum Documentation to the Extent that such Documents are Included in the Fields Searched 8 | |
|---|---|
| Jitsuyo Shinan Koho | 1971 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 57-169812 (Fujitsu Fanuc, Ltd.) 19 October 1982 (19. 10. 82) Page 2, lower left column, line 15 to lower right column, line 20 (Family: none) | 1-8 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 19, 1989 (19. 05. 89) | June 5, 1989 (05. 06. 89) |
| International Searching Authority | Signature of Authorized Officer |
| Japanese Patent Office | |

Form PCT-ISA 210 (second sheet) (January 1985)